# EUROPÄISCHE PATENTSCHRIFT

(11) **EP 1 249 544 B1**
(45) Veröffentlichungstag und Bekanntmachung des Hinweises auf die Patenterteilung: **21.05.2003**
(21) Anmeldenummer: 01109237.6
(22) Anmeldetag: 14.04.2001
(51) Int. Cl.: E03C 1/05, G05D 23/13, G05D 7/06, G05D 27/02

(54) **Vorrichtung zur Steuerung der Wannenbefüllung einer Sanitärwanne**
Device for the control of filling of a sanitary bath tub
Dispositif pour contrôler le remplissage d'une baignoire sanitaire

(43) Veröffentlichungstag der Anmeldung: 16.10.2002
(73) Patentinhaber: Franz Kaldewei GmbH & Co.KG, 59229 Ahlen (DE)
(72) Erfinder: Mateina, Ludger, 59227 Ahlen (DE)
(74) Vertreter: Masch, Karl Gerhard, Dr.

(56) Entgegenhaltungen:
- EP-A- 0 358 173
- EP-A- 0 890 717
- EP-A- 0 995 844
- DE-U- 29 620 414
- GB-A- 2 174 219

## Beschreibung

Die Erfindung betrifft eine Vorrichtung zur Steuerung des Mischwasserzulaufs und der Mischwassertemperatur an einer sanitären Anlage, insbesondere zur Steuerung der Wannenbefüllung einer Sanitärwanne, mit einer Mischarmatur im Wasserzulauf und einer der Mischarmatur zugeordneten elektronischen Steuerung, die Schnittstellen zum Anschluss mindestens eines Eingabe- und Ausgabegerätes, eines Temperaturfühlers und einer Einrichtung zur Erfassung der Wannenfüllung aufweist, und mit Messeinrichtungen zur Messung der Mischwassertemperaturen des Mischwasserdurchflusses verbunden ist, wobei
die Mischarmatur einen Ventilblock aufweist, der separate Einlässe für Kaltwasser und Warmwasser, einen Mischwasserkanal mit einem Mischwasserauslass und Ventilkammern für Ventile enthält,
an der Außenseite des Ventilblocks an die Steuerung angeschlossene Drehventilantriebe befestigt sind und
dem Mischwasserauslass mindestens ein von der Steuerung schaltbares Absperrventil zugeordnet ist.

Eine Vorrichtung mit den beschriebenen Merkmalen ist aus EP-A 0 358 173 bekannt. Die bekannte Vorrichtung weist separate Steuerungen für die Mischwassertemperatur und den Mischwassermengenstrom auf, wobei die Einstellung der Steuerventile durch axiale Stellbewegungen erfolgt. Die Transformation der Drehbewegung der Antriebsmotoren in eine axiale Stellbewegung erfolgt über eine Getriebevorrichtung und eine Gewindestange, welche durch eine Drehbewegung axial verstellbar ist. Mit steigender Zahl der Mischwasserauslässe steigt auch die Zahl der erforderlichen Antriebsmotoren, Ventilantriebe, regulierbaren Ventile und Getriebevorrichtungen.

Eine aus GB-A 2 174 219 bekannte Vorrichtung zur Steuerung der Wannenbefüllung einer Sanitärwanne weist voneinander unabhängig steuerbare Ventile zum Dosieren der Kalt- und Warmwasserströme auf, die an eine elektronische Steuerung angeschlossen sind. An die Steuerung ist ferner ein Temperaturfühler sowie eine Füllstandskontrolleinrichtung angeschlossen. Die elektronische Steuerung ist von einem Datenein- und Ausgabegerät, das am Wannenrand der Sanitärwanne angeordnet ist, programmierbar und ermöglicht eine automatische Wannenbefüllung mit einer vorgegebenen Wassertemperatur und einer vorgegebenen Wassermenge.

Bei einer aus GB-A 2 242 758 bekannten Anordnung sind an eine Sanitärwanne separate Zuläufe für das Warmwasser und Kaltwasser angeschlossen. Beide Zuläufe sind jeweils mit einer Durchflussmesseinrichtung, einer Temperaturmesseinrichtung sowie Stellventilen zur Regelung der jeweiligen Mengenströme ausgerüstet. Die Steuereinrichtung ermöglicht eine automatische Befüllung der Sanitärwanne, wobei die Wassermenge, die Wassertemperatur und auch der Zeitpunkt der Befüllung durch ein Datenein- und Ausgabegerät vorgegeben werden können. Die Werte sind speicherbar. Die Verrohrung mit zugeordneten Stelleinrichtungen sowie die Mess-und Regeltechnik sind aufwendig. Die Arbeiten müssen vor Ort von Fachkräften ausgeführt werden.

Die Druckschrift DE-U 296 20 414 beschreibt eine Vorrichtung zur Steuerung von Mischwassertemperatur und Mischwassermengenstrom mit einem einzigen Mischwasserauslass. Die Druckschrift enthält jedoch keine näheren Angaben über den konstruktiven Aufbau und den Platzbedarf der Mess- und Steuervorrichtung.

Der Erfindung liegt die Aufgabe zugrunde, eine Vorrichtung zur Steuerung der Mischwasserzulaufes und der Mischwassertemperatur an einer sanitären Anlage anzugeben, die einfach und kompakt aufgebaut ist. Die Vorrichtung soll ferner eine weitgehende Automatisierung der Wannenbefüllung einer Sanitärwanne ermöglichen und leicht montierbar sein.

Ausgehend von einer Vorrichtung mit den eingangs beschriebenen Merkmalen wird die Aufgabe erfindungsgemäß dadurch gelöst,
dass die Ventile als Drehventile mit rotierend beweglichen Ventilkörpern ausgebildet und im Kaltwassereinlass sowie im Warmwassereinlass angeordnet sind,
dass den beiden Drehventilen zwei unabhängig voneinander steuerbare Kleingetriebemotoren als Drehventilantriebe zugeordnet sind, wobei an die Antriebswellen der Kleingetriebemotoren Ritzel angeschlossen sind, die jeweils mit einem auf einer Betätigungswelle des zugeordneten Drehventils angeordneten Zahnrad kämmen, und wobei Messgeber vorgegeben sind, welche den Drehwinkel der Betätigungswelle abgreifen,
und dass durch die von der elektronischen Steuerung gesteuerten Stellbewegungen der beiden Drehventile sowohl das Mischungsverhältnis der Kalt- und Warmwassereintrittsströme als auch der Gesamtmengenstrom geregelt werden.

Die erfindungsgemäße Vorrichtung ist zum Beispiel bei einer Dusche zur Steuerung des Duschwasserzulaufes und der Duschwassertemperatur einsetzbar. Vor allem eignet sie sich zur Steuerung der Wannenbefüllung einer Sanitärwanne. Gemäß einer bevorzugten Ausführung der Erfindung ist an dem Mischwasserauslass ein Verteiler angeschlossen, der mindestens zwei mit Absperrventilen versehene Auslässe aufweist, wobei die Absperrventile von der Steuerung schaltbar sind.

Die Mischarmatur weist an die elektronische Steuerung angeschlossene Messeinrichtungen zur Messung der Mischwassertemperatur und des Mischwasserdurchflusses auf. Die Durchflussmesseinrichtung ist zweckmäßig zwischen dem Mischwasserauslass des Ventilblockes und dem auslassseitigen Verteiler angeordnet. Der Temperaturfühler kann durch eine seitliche Öffnung des Ventilblockes in den Mischkanal des Ventilblockes eingesetzt werden. Eine Anordnung des Temperaturfühlers im Verteiler soll jedoch nicht ausgeschlossen sein. Die Anordnung aller Drehventile in einem einzigen Ventilblock, der außenseitig die erforderlichen Drehventilantriebe trägt, führt zu einem sehr kompakten Aufbau des Aggregates. Die Vorrichtung erlaubt mit nur zwei Drehventilantrieben, die Steuerung der Mischwassermenge und der Mischwassertemperatur. Durch Schaltung der Auslassventile, die als einfache Magnetventile ausgeführt sein können und von der elektronischen Steuerung geschaltet werden, kann das Mischwasser beispielsweise wahlweise einem Wanneneinlauf oder einer Handbrause zugeführt werden.

Die erfindungsgemäß ausgebildete, kompakt aufgebaute Mischarmatur und die zugeordnete elektronische Steuerung sind zweckmäßig innerhalb eines von einer Wannenverkleidung umschlossenen Raumes angeordnet. Die elektronische Steuerung ist dabei von mindestens einem externen Datenein- und Ausgabegerät steuer- und programmierbar.

Das Datenein- und Ausgabegerät weist eine Einrichtung für eine drahtlose oder leitungsgebundene Datenübertragung auf und kann für einen Netzbetrieb oder einen Batterie/Akkubetrieb eingerichtet sein. Es umfasst Tasten für die Inbetriebnahme (Ein/Aus), die Umstellung des Strömungsweges zwischen einem Wanneneinlauf und einer Handbrause und die Vorwahl des Mengenstromes. Ferner sind Tasten vorgesehen für die Eingabe von Vorgabewerten für die Wassertemperatur und/oder Füllmenge und/oder den Zeitpunkt der Wannenbefüllung. Vorzugsweise weist das Datenein- und Ausgabegerät ferner Speichertasten zur Speicherung von Vorgabewerten sowie ein Display für die Anzeige der Einstellwerte auf. Es versteht sich, dass auf dem Display nicht nur die Vorgabewerte sondern auch die Istwerte, z. B. die Badewassertemperatur und die tatsächliche in die Sanitärwanne eingelassene Füllmenge, angezeigt werden können. Für den Einsatz in Feuchträumen ist das Ein- und Ausgabegerät zweckmäßig mit einer wasserdichten Folientastatur ausgerüstet. Es kann als tragbares Fernbedienungsgerät ausgebildet oder in den Wannenrand der Sanitärwanne eingelassen sein. Ausführungen, bei denen das Ein- und Ausgabegerät wandseitig in eine Unterputzdose eingesetzt ist, sollen nicht ausgeschlossen sein.

In weiterer Ausgestaltung lehrt die Erfindung, dass an die elektronische Steuerung ein Wannenthermometer und/oder eine Einrichtung zur Erfassung der Füllstandshöhe und/oder ein Lautsprecher zur Abgabe eines akustischen Signals angeschlossen sind. Die Einrichtung zur Erfassung der Füllstandshöhe kann z. B. aus einem Drucksensor oder einer im Wannenzulauf angeordneten Volumenstrom-Messeinrichtung bestehen. Mit der Steuereinrichtung können ferner Zusatzeinrichtungen, z. B. Wannenscheinwerfer oder Umwälzpumpen eines Whirlsystems, betätigt werden.

Gemäß einer weiteren Ausgestaltung der erfindungsgemäßen Lehre ist zusätzlich eine von der elektronischen Steuerung ansteuerbare Stelleinrichtung zur Betätigung eines Auslaufventils im Wannenablauf vorgesehen, die ein Schiebergehäuse mit einem Schieber sowie einen am Schiebergehäuse befestigten und an die Steuerung angeschlossenen Stellmotor zur Betätigung des Schiebers aufweist. Der Schieber ist ein durch Zug/Druckbetätigungselement mit dem Auslaufventil fernwirkend verbunden. Der Stellmotor weist zweckmäßig ein Abtriebsritzel auf, welches mit einem Zahnprofil des Schiebers kämmt.

Die elektronische Steuerung ist mit integrierten Schaltkreisen ausgerüstet. Durch die Fernbedienung kann ein Programm gestartet werden, bei dem der Wannenablauf geschlossen und eine bestimmte Füllmenge mit einer bestimmten vorgegebenen oder wählbaren Wassertemperatur in die Sanitärwanne eingelassen wird. Im Rahmen der Programmvorwahl kann bestimmt werden, ob der Füllvorgang sofort oder zu einem späteren Zeitpunkt erfolgen soll. Die Steuerintelligenz ist im Elektronikteil der der Mischarmatur zugeordneten Steuereinrichtung untergebracht. Durch die Fernbedienung wird der Programmablauf gestartet, wobei gegebenenfalls eine Programmauswahl aus zwei oder mehr Programmen vorgenommen werden kann. Die elektronische Steuerung kann ferner eine Schnittstelle für ein Bussystem aufweisen und durch die Bus-Ankopplung mit einer Steuerzentrale für Hausleittechnik verbunden werden.

Im Folgenden wird die Erfindung anhand von Zeichnungen, die lediglich Ausführungsbeispiele darstellen, erläutert. Es zeigen schematisch
- **Fig. 1**: eine Vorrichtung zur Steuerung der Wannenbefüllung einer Sanitärwanne, dargestellt in Form einer Systemzeichnung mit den zur Vorrichtung gehörenden Systemkomponenten,
- **Fig. 2 und 3**: eine zu der in Fig. 1 dargestellten Anordnung gehörende Mischarmatur in perspektivischer Darstellung aus unterschiedlichen Blickrichtungen,

- **Fig. 4**: einen Funktionsschaltplan für die in den Fig. 2 und 3 dargestellte Mischarmatur,
- **Fig. 5**: eine zu der in Fig. 1 dargestellten Anordnung gehörende Stelleinrichtung zur Betätigung eines Auslaufventils im Wannenablauf,
- **Fig. 6**: einen Ausschnitt aus Fig. 5 in vergrößerter Darstellung.

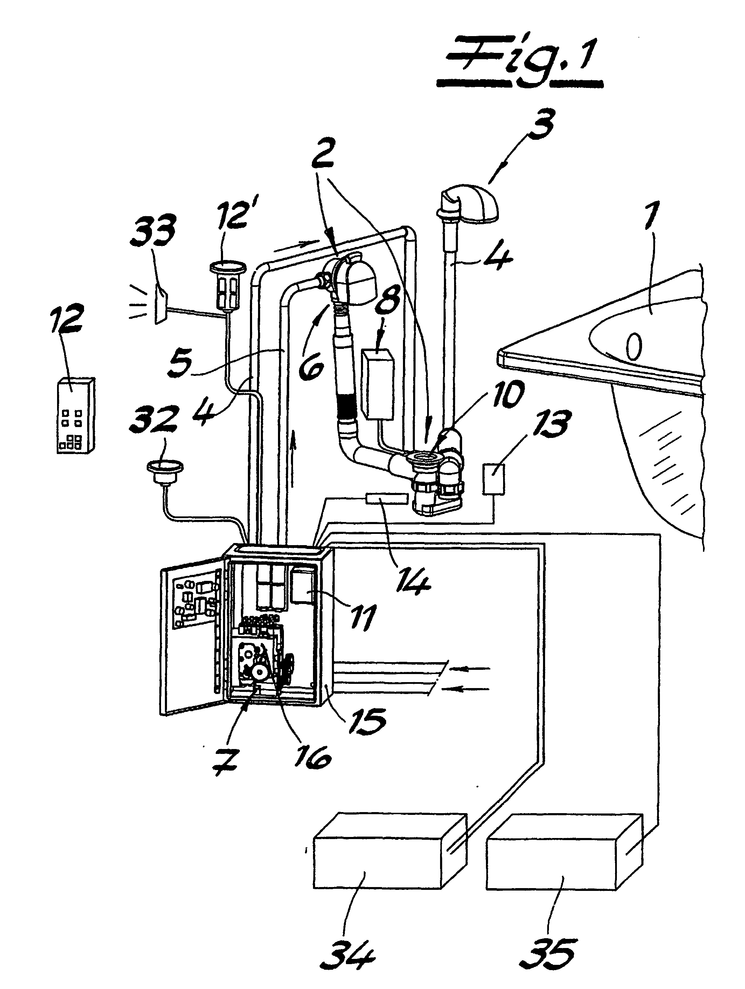

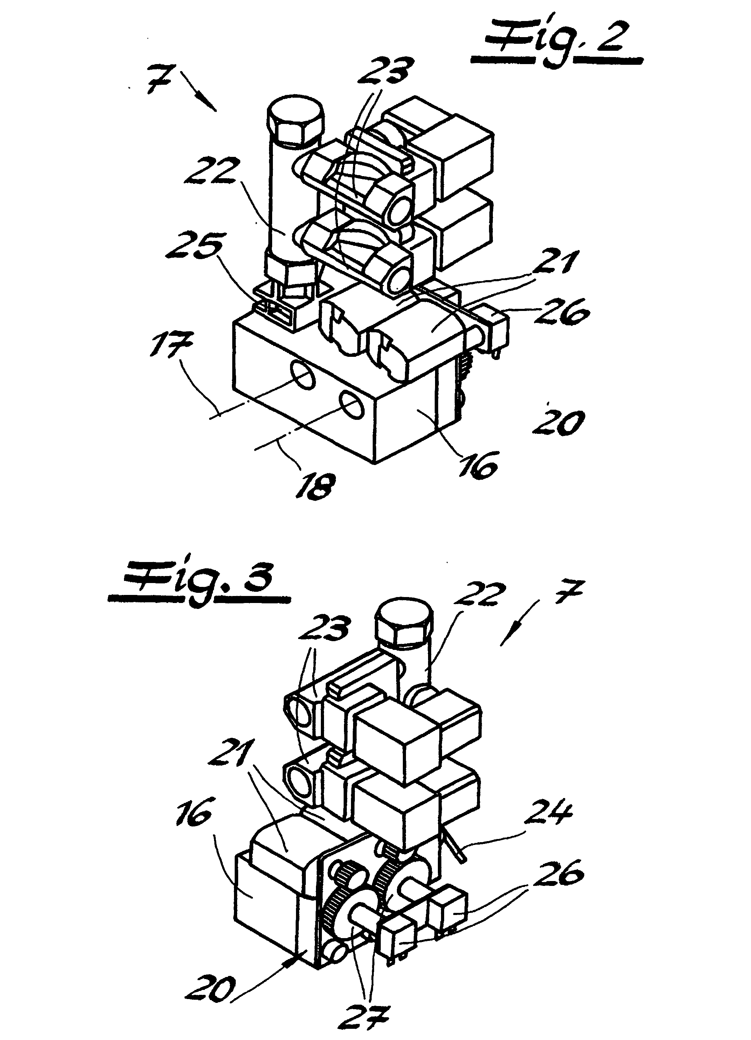

Die in Fig. 1 dargestellte Vorrichtung dient zur Steuerung der Wannenbefüllung einer Sanitärwanne 1, an die eine übliche Garnitur 2 für Wassereinlauf, Wasserüberlauf und Wasserablauf angeschlossen sind. Ferner ist eine Handbrause 3 vorgesehen. Das Wasser kann wahlweise über angeschlossene Rohrleitungen 4, 5 der Handbrause 3 oder dem Wanneneinlauf 6 zugeführt werden.

Zum grundsätzlichen Aufbau der Vorrichtung gehören eine Mischarmatur 7 im Wasserzulauf, eine Stelleinrichtung 8 zur Betätigung eines Auslaufventils 9 im Wannenablauf 10 und eine elektronische Steuerung 11 für die Mischarmatur 7 sowie für die Stelleinrichtung 8. Die elektronische Steuerung weist Schnittstellen zum Anschluss mindestens eines Datenein- und Ausgabegerätes 12, 12', eines externen Temperaturfühlers 13 und eine Einrichtung 14 zur Erfassung der Wannenfüllung auf. die Mischarmatur 7 sowie die elektronische Steuerung 11 sind in einem Anschlusskasten 15 untergebracht, der in einem von der Sanitärwanne 1 und einer nicht dargestellten Wannenverkleidung umschlossenen Raum verdeckt angeordnet ist. Die elektronische Steuerung 11 ist mit externen Datenein- und Ausgabegeräten 12, 12' steuerbar, die eine Einrichtung für eine drahtlose Übertragung, Tasten für die Inbetriebnahme (Ein/Aus), Tasten für die Eingabe von Vorgabewerten für die Wassertemperatur und/oder Füllmenge und/oder den Zeitpunkt der Wannenbefüllung, Speicherdaten zur Speicherung von Vorgabewerten und ein Display für die Anzeige der Einstellwerte aufweisen. Die Datenein- und/oder Ausgabegeräte 12, 12' sind zweckmäßig mit einer wasserdichten Folientastatur ausgerüstet und können als tragbares Fernbedienungsgerät ausgebildet sein oder ortsfest, z. B. in den Wannenrand der Sanitärwanne eingelassen sein. Mit Hilfe der Datenein- und/oder Ausgabegeräte 12, 12' kann auch eine Umschaltung des Wasserzulaufs zum Wanneneinlauf 6 oder zur Handbrause 3 vorgenommen werden. Ferner ist es möglich, mit Hilfe dieser Geräte 12, 12' auch den Wassermengenstrom vorzuwählen und Zusatzeinrichtungen, z. B. Wannenscheinwerfer, zu betätigen.

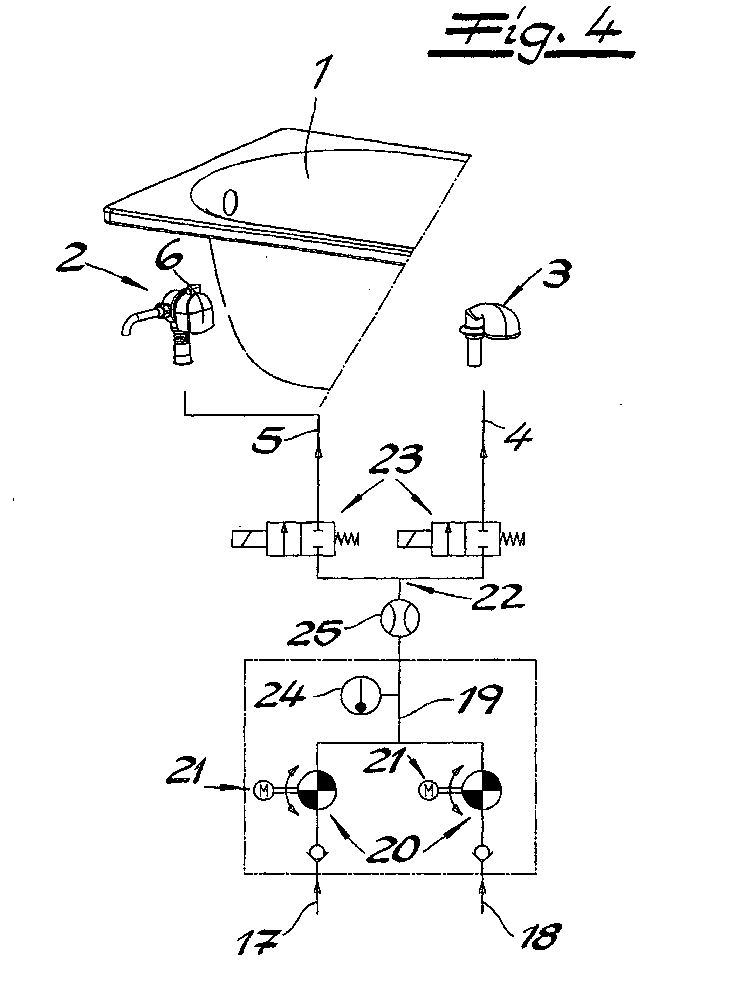

Der konstruktive Aufbau der Mischarmatur 7 ist in den Fig. 2 bis 4 dargestellt. Die Mischarmatur weist einen Ventilblock 16 auf, der separate Einlässe 17, 18 für Kaltwasser und Warmwasser, einen Mischwasserkanal 19 mit einem Mischwasserauslass und Ventilkammern für Drehventile 20 mit rotierend beweglichen Ventilkörpern enthält. An der Außenseite des Ventilblocks 16 sind zwei an die elektronische Steuerung 11 angeschlossene Drehventilantriebe 21 befestigt. An den Mischwasserauslass ist ein Verteiler 22 angeschlossen, der zwei mit Absperrventilen 23 versehene Auslässe aufweist. Die Auslässe sind über die Rohrleitungen 4, 5 mit der Handbrause 3 bzw. dem Wanneneinlauf 6 verbunden.

Die Mischarmatur 7 weist an die elektronische Steuerung 11 angeschlossene Messeinrichtungen 24, 25 zur Messung der Mischwassertemperatur und des Mischwasserdurchflusses auf. Der Temperaturfühler 24 für die Messung der Mischwassertemperatur ist in den Mischwasserkanal 19 eingesetzt. Die Messeinrichtung 25 zur Messung des Mischwasserdurchflusses besteht aus einem handelsüblichen Durchflussmessgerät, das zwischen dem Mischwasserauslass und dem Verteiler 22 angeordnet ist. Die Stellung der Drehventile 20 wird durch Messgeber 26 erfasst, welche den Drehwinkel der nach außen geführten und an die Ventilkörper angeschlossenen Betätigungswellen abgreifen. Die Drehventilantriebe 21 bestehen aus Kleingetriebemotoren, an deren Abtriebswellen Ritzel angeschlossen sind, die mit einem auf der Betätigungswelle des zugeordneten Drehventils angeordneten Zahnrad 27 kämmen. Die Drehventile sind als Drehschieber oder Kükenventile ausgebildet.

Durch die von der elektronischen Steuerung gesteuerten Stellbewegungen der Drehventile 20 ist das Mischungsverhältnis der Kalt- und Warmwassereintrittsströme sowie der Gesamtmengestrom regelbar. Auch die Absperrventile 23, die im Ausführungsbeispiel und nach bevorzugter Ausführung der Erfindung aus Magnetventilen bestehen, sind von der elektronischen Steuerung 11 aus schaltbar.

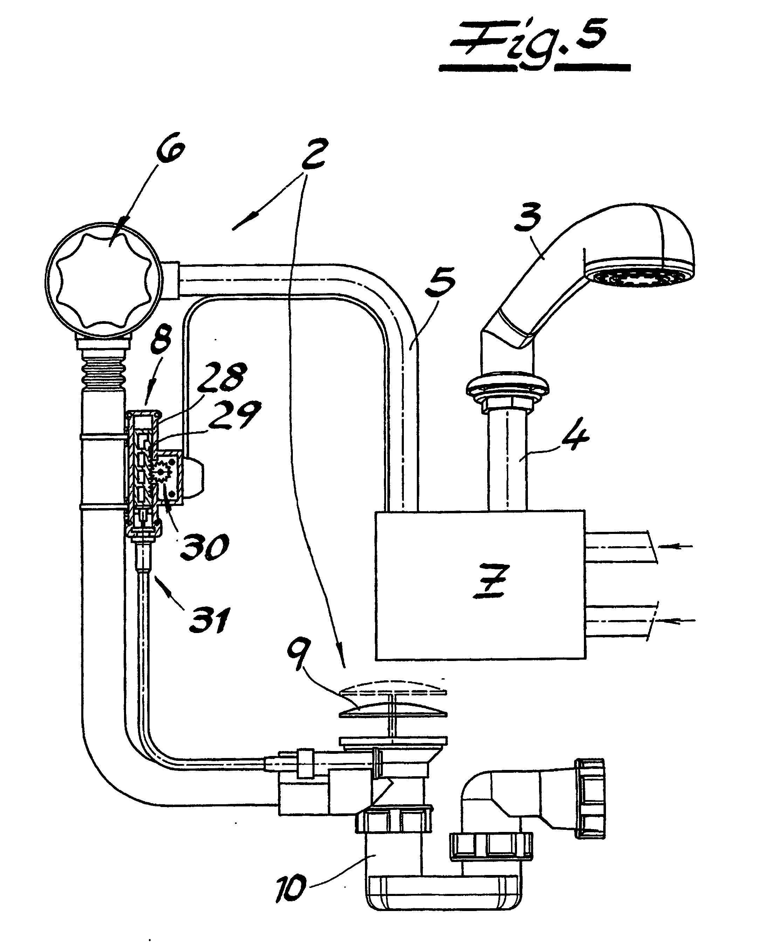

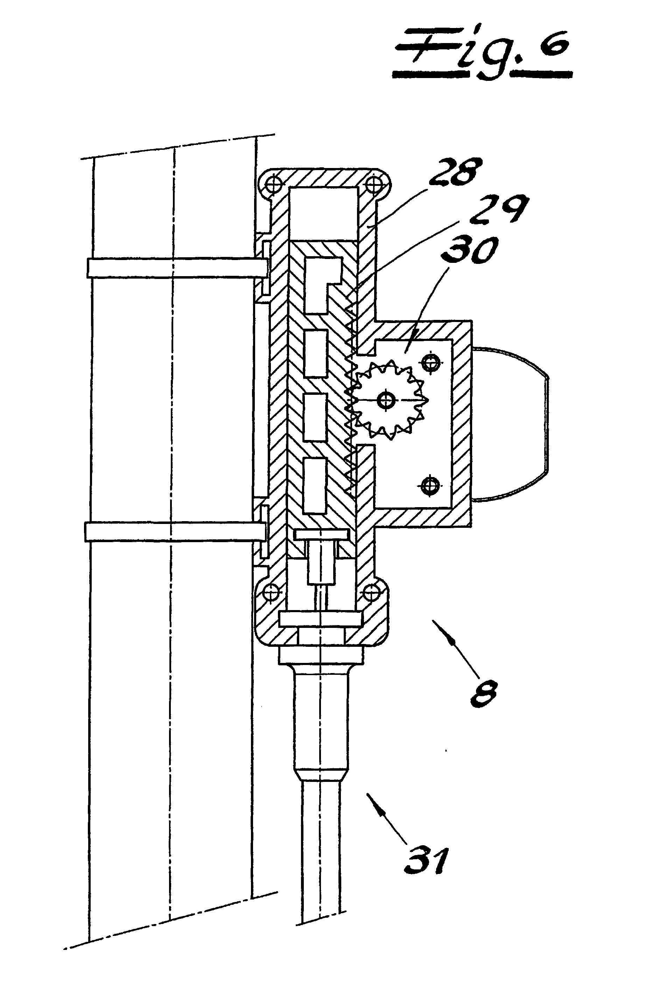

Die elektronische Steuerung 11 arbeitet auch auf die Stelleinrichtung 8, deren konstruktiver Aufbau aus den Fig. 5 und 6 verständlich wird. Die Stelleinrichtung 8 zur Betätigung des Auslaufventils 9 weist ein Schiebergehäuse 28 mit einem Schieber 29 sowie einen am Schiebergehäuse 28 befestigten Stellmotor 30 zur Betätigung des Schiebers 29 auf. Die Bewegungsübertragung erfolgt durch ein Abtriebsritzel des Stellmotors 30, welches mit einem Zahnprofil des Schiebers 29 kämmt. Der Schieber 29 ist durch ein Zug/Druckbetätigungselement (31) mit dem Auslaufventil 9 fernwirkend verbunden. Das Zug/Druckbetätigungselement 31 besteht aus einer fest eingespannten Hülse und einer axial beweglichen Seele. Der Stellmotor 30 der Stelleinrichtung ist von der elektronischen Steuerung 11 ansteuerbar.

Die elektronische Steuerung 11 ist mit integrierten Schaltkreisen ausgerüstet. An die Steuerung sind im Ausführungsbeispiel ein Wannenthermometer 13, welches an der Außenseite der Sanitärwanne befestigbar ist, und ein Drucksensor 14, durch den die Füllstandshöhe gemessen wird, angeschlossen. Anstelle einer Druckmessung kann auch eine Volumenstrommessung im Wannenzulauf erfolgen. Ferner sind ein Wannenscheinwerfer 32 und/oder ein Lautsprecher 33 zur Abgabe eines akustischen Signals vorgesehen, der z. B. das Ende einer Wannenfüllung und/oder Störungen akustisch anzeigt. Die elektronische Steuerung weist ferner Schnittstellen für ein Bus-System 34 und zur Ankopplung eines Whirlsystems 35, welches Umwälzpumpen und dergleichen aufweist, auf.

Die elektronische Steuerung ist so eingerichtet, dass eine maximale Badewassertemperatur von z. B. 38° C nicht überschritten (Verbrühschutz) wird und/oder bei Überschreitung einer Grenztemperatur ein akustisches Warnsignal abgegeben wird. Ferner kann vorgesehen werden, dass bei einem Spannungsabfall der in den Datenein- und/oder Ausgabegeräten eingesetzten Batterien/Akkus ein optisches Signal abgegeben wird und dass bei Ausfall des Netzstromes eine die Wasserzufuhr zur Sanitärwanne unterbrechende Absperreinrichtung selbsttätig schließt.

## Patentansprüche

1. Vorrichtung zur Steuerung des Mischwasserzulaufs und der Mischwassertemperatur an einer sanitären Anlage, insbesondere zur Steuerung der Wannenbefüllung einer Sanitärwanne, mit einer Mischarmatur (7) im Wasserzulauf und einer der Mischarmatur (7) zugeordneten elektronischen Steuerung (11), die Schnittstellen zum Anschluss mindestens eines Eingabe- und Ausgabegerätes (12, 12'), eines Temperaturfühlers (13, 24) und einer Einrichtung zur Erfassung der Wannenfüllung (14, 25) aufweist und mit Messeinrichtungen (24, 25) zur Messung der Mischwassertemperatur und des Mischwasserdurchflusses verbunden ist, wobei
die Mischarmatur (7) einen Ventilblock (16) aufweist, der separate Einlässe (17, 18) für Kaltwasser und Warmwasser, einen Mischwasserkanal (19) mit einem Mischwasserauslass und Ventilkammern für Ventile enthält,
an der Außenseite des Ventilblocks (16) an die Steuerung (11) angeschlossene Drehventilantriebe (21) befestigt sind und
dem Mischwasserauslass mindestens ein von der Steuerung (11) schaltbares Absperrventil (23) zugeordnet ist,
**dadurch gekennzeichnet, dass** die Ventile als Drehventile (20) mit rotierend beweglichen Ventilkörpern ausgebildet und im Kaltwassereinlass (17) sowie im Warmwassereinlass (18) angeordnet sind,
dass den beiden Drehventilen (20) zwei unabhängig voneinander steuerbare Kleingetriebemotoren als Drehventilantriebe (21) zugeordnet sind, wobei an die Antriebswellen der Kleingetriebemotoren Ritzel angeschlossen sind, die jeweils mit einem auf einer Betätigungswelle des zugeordneten Drehventils (20) angeordneten Zahnrad kämmen, und wobei Messgeber (26) vorgesehen sind, welche den Drehwinkel der Betätigungswelle abgreifen,
und dass durch die von der elektronischen Steuerung (11) gesteuerten Stellbewegungen der beiden Drehventile (20) sowohl das Mischungsverhältnis der Kalt- und Warmwassereintrittsströme als auch der Gesamtmengenstrom geregelt werden.

2. Vorrichtung nach Anspruch 1, **dadurch gekennzeichnet, dass** an den Mischwasserauslass ein Verteiler (22) angeschlossen ist, der mindestens zwei mit Absperrventilen (23) versehene Auslässe aufweist, wobei die Absperrventile (23) von der Steuerung (11) schaltbar sind.

3. Vorrichtung nach einem der Ansprüche 1 oder 2, **dadurch gekennzeichnet, dass** die Drehventile (20) als Drehschieber oder Kükenventile ausgebildet sind.

4. Vorrichtung nach einem der Ansprüche 1 bis 3, **dadurch gekennzeichnet, dass** die an den Verteiler (22) angeschlossenen Absperrventile (23) als Magnetventile ausgebildet sind.

5. Vorrichtung nach einem der Ansprüche 1 bis 4, **dadurch gekennzeichnet, dass** die Mischarmatur (7) und die zugeordnete elektronische Steuerung (11) innerhalb eines von einer Wannenverkleidung umschlossenen Raumes angeordnet sind und dass die elektronische Steuerung (11) von mindestens einem externen Datenein- und Ausgabegerät (12, 12') steuerbar ist.

6. Vorrichtung nach einem der Ansprüche 1 bis 5, **dadurch gekennzeichnet, dass** das Datenein- und Ausgabegerät (12, 12') eine Einrichtung für eine drahtlose oder leitungsgebundene Datenübertragung, Tasten für die Inbetriebnahme, die Umstellung des Strömungsweges zwischen einem Wanneneinlauf und einer Handbrause und die Einstellung des Mengenstromes, Tasten für die Eingabe von Vorgabewerten für die Wassertemperatur und/oder Füllmenge und/oder den Zeitpunkt der Wannenbefüllung, Speichertasten zur Speicherung von Vorgabewerten und ein Display für die Anzeige der Einstellwerte aufweist.

7. Vorrichtung nach einem der Ansprüche 1 bis 6, **dadurch gekennzeichnet, dass** das Datenein- und Ausgabegerät (12, 12') eine wasserdichte Folientastatur aufweist und als tragbares Fernbedienungsgerät ausgebildet oder in den Wannenrand der Sanitärwanne eingelassen oder wandseitig in eine Unterputzdose eingesetzt ist.

8. Vorrichtung nach einem der Ansprüche 1 bis 7, **dadurch gekennzeichnet, dass** an die elektronische Steuerung (11) ein Wannenthermometer (13) und/oder eine Einrichtung (14) zur Erfassung der Füllstandshöhe und/oder einen Lautsprecher (33) zur Abgabe eines akustischen Signals angeschlossen ist.

9. Vorrichtung nach einem der Ansprüche 1 bis 6 **dadurch gekennzeichnet, dass** mit der elektronischen Steuerung (11) Zusatzeinrichtungen, z. B. Wannenscheinwerfer (32) oder Umwälzpumpen eines Whirlsystems (35), betätigbar sind.

10. Vorrichtung nach einem der Ansprüche 1 bis 9, **dadurch gekennzeichnet, dass** die elektronische Steuerung (11) eine Schnittstelle für ein BUS-System (34) aufweist.

11. Vorrichtung nach einem der Ansprüche 1 bis 10, **dadurch gekennzeichnet, dass** zusätzlich eine von der elektronischen Steuerung (11) ansteuerbare Stelleinrichtung (8) zur Betätigung eines Auslaufventils (9) im Wannenablauf vorgesehen ist, die ein Schiebergehäuse (28) mit einem Schieber (29) sowie einen am Schiebergehäuse (28) befestigten und an die Steuerung (11) angeschlossenen Stellmotor (30) zur Betätigung des Schiebers (29) aufweist und dass der Schieber (29) durch ein Zug/Druck-Betätigungselement (31) mit dem Auslaufventil (9) fernwirkend verbunden ist.

12. Vorrichtung nach Anspruch 11, **dadurch gekennzeichnet, dass** der Stellmotor (30) ein Abtriebsritzel aufweist, welches mit einem Zahnprofil des Schiebers (29) kämmt.

## Claims

1. An apparatus for controlling the mixed water supply and the mixed water temperature on a sanitary installation, particularly for controlling the filling of the tub of a sanitary tub, comprising a mixer fitting (7) in the water supply and an electronic controller (11) which is associated with the mixer fitting (7) and which comprises interfaces for the connection of at least one input and output device (12, 12'), a temperature sensor (13, 24) and a device for detecting the filling of the tub (14, 25), which controller is connected to measuring devices (24, 25) for measuring the mixed water temperature and the mixed water flow, wherein
the mixer fitting (7) comprises a valve block (16) which contains separate inlets (17, 18) for cold water and hot water, a mixed water channel (19) comprising a mixed water outlet, and valve compartments for valves,
rotary valve drives (21), which are connected to the controller (11), are fixed to the outside of the valve block (16), and
at least one shut-off valve (23), which can be opened and closed by the controller (11), is associated with the mixed water outlet,
**characterised in that** the valves are constructed as rotary valves (20) comprising valve bodies which can move in rotation, and are disposed in the cold water inlet (17) and in the hot water inlet (18),
that two small geared motors, which can be controlled independently of each other, are associated as rotary valve drives (21) with the two rotary valves (20), wherein pinions are attached to the drive shafts of the small geared motors and each mesh with a gearwheel disposed on an operating spindle of the associated rotary valve (20), and wherein measurement transmitters (26) are provided which measure the angle of rotation of the operating spindle, and that the mixing ratio of the cold and hot water inlet flows, as well as the total mass flow, are regulated by the control movements of the two rotary valves (20), which movements are controlled by the electronic controller (11).

2. An apparatus according to claim 1, **characterised in that** a distributor (22) is connected to the mixed water outlet and comprises at least two outlets which are provided with shut-off valves (23), wherein the shut-off valves (23) can be opened and closed by the controller (11).

3. An apparatus according to either one of claims 1 or 2, **characterised in that** the rotary valves (20) are constructed as rotary slide valves or cock valves.

4. An apparatus according to any one of claims 1 to 3, **characterised in that** the shut-off valves (23) which are connected to the distributor (22) are constructed as solenoid valves.

5. An apparatus according to any one of claims 1 to 4, **characterised in that** the mixer fitting (7) and the associated electronic controller (11) are disposed inside a space enclosed by the tub panelling, and that the electronic controller (11) can be controlled by at least one external data input and output device (12, 12').

6. An apparatus according to any one of claims 1 to 5, **characterised in that** the data input and output device (12, 12') comprises a device for wireless or wired data transmission, keys for setting the apparatus in operation, keys for changing over the flow path between a tub inlet and a hand-operated shower attachment and for adjusting the mass flow, keys for inputting specified values for the water temperature and/or the filling quantity and/or the time at which the tub is filled, memory keys for storing specified values, and a display for indicating the set values.

7. An apparatus according to any one of claims 1 to 6, **characterised in that** the data input and output device (12, 12') comprises a water-tight, film-covered keypad and is designed as a portable remote control device, or is let into the tub edge of the sanitary tub, or is inserted in a recessed wall outlet.

8. An apparatus according to any one of claims 1 to 7, **characterised in that** a tub thermometer (13) and/or a device (14) for detecting the height of filling and/or a loudspeaker (33) for emitting an acoustic signal are connected to the electronic controller (11).

9. An apparatus according to any one of claims 1 to 6, **characterised in that** additional devices, e.g. tub spotlights (32) or recirculating pumps of a jacuzzi system (35), can be operated by the electronic controller (11).

10. An apparatus according to any one of claims 1 to 9, **characterised in that** the electronic controller (11) comprises an interface for a BUS system (34).

11. An apparatus according to any one of claims 1 to 10, **characterised in that** an actuating device (8) which can be triggered by the electronic controller (11) is additionally provided for operating a drain valve (9) in the tub drain outlet, which actuating device comprises a slide housing (28) containing a slide (29), as well as a servomotor (30), which is fixed to the slide housing (28) and is connected to the controller (11), for operating the slide (29), and that the slide (29) is connected by a remote control push/pull operating element (31) to the drain valve (9).

12. An apparatus according to claim 11, **characterised in that** the servomotor (30) comprises an output pinion which meshes with a toothed profile on the slide (29).

## Revendications

1. Dispositif pour commander l'arrivée d'eau mélangée et la température de l'eau mélangée d'une installation sanitaire, en particulier pour commander le remplissage d'une baignoire sanitaire, avec un robinet mélangeur (7) dans l'arrivée d'eau et une commande électronique (11) associée au robinet mélangeur (7), qui comporte des interfaces pour le raccordement d'au moins un appareil d'entrée et de sortie (12, 12'), une sonde de température (13, 24) et un dispositif pour détecter le remplissage (14, 25) de la baignoire, et qui est reliée à des dispositifs de mesure (24, 25) pour la mesure de la température de l'eau mélangée et du débit de l'eau mélangée, dans lequel :
le robinet mélangeur (7) comporte un bloc de distribution (1) qui contient des arrivées (17, 18) séparées pour l'eau froide et l'eau chaude, un canal d'eau mélangée (19) avec une sortie d'eau mélangée et des chambres de vannes pour des vannes,
des entraînements de vanne rotative (21) raccordés à la commande (11) sont fixés sur le côté extérieur du bloc de distribution (16), et
au moins une vanne d'arrêt (23), qui peut être commandée par la commande (11), est associée à la sortie d'eau mélangée,
**caractérisé en ce que** les vannes sont réalisées en tant que vannes rotatives (20) avec des corps de vanne mobiles en rotation et sont disposées dans l'arrivée d'eau froide (17) ainsi que dans l'arrivée d'eau chaude (18),
**en ce qu'**aux deux vannes rotatives (20) sont associés deux petits motoréducteurs, pouvant être commandés indépendamment l'un de l'autre, servant d'entraînements de vanne rotative (21), aux arbres d'entraînement des petits motoréducteurs sont raccordés des pignons qui engrènent chacun avec une roue dentée disposée sur un arbre d'actionnement de la vanne rotative (20) associée, et il est prévu des capteurs de mesure (26), qui détectent l'angle de rotation de l'arbre d'actionnement,
et **en ce que** le rapport de mélange des courants d'arrivée d'eau froide et d'eau chaude ainsi que le débit total sont régulés par les mouvements de réglage, commandés par la commande électronique (11), des deux soupapes tournantes (20).

2. Dispositif selon la revendication 1, **caractérisé en ce qu'**à la sortie d'eau mélangée est raccordé un répartiteur (22) qui comporte au moins deux écoulements pourvus de vannes d'arrêt (23), les vannes d'arrêt (23) pouvant être commandées par la commande (11).

3. Dispositif selon l'une des revendications 1 ou 2, **caractérisé en ce que** les vannes rotatives (10) sont réalisées sous la forme de tiroirs rotatifs ou de robinets à boisseau.

4. Dispositif selon l'une des revendications 1 à 3, **caractérisé en ce que** les vannes d'arrêt (23) raccordées au répartiteur (22) sont réalisées en tant qu'électrovannes.

5. Dispositif selon l'une des revendications 1 à 4, **caractérisé en ce que** le robinet mélangeur (7) et la commande électronique (11) associée sont disposés à l'intérieur d'un volume enfermé par un habillage de baignoire et **en ce que** la commande électronique (11) peut être commandée par au moins un appareil externe d'entrée et de sortie de données (12, 12').

6. Dispositif selon l'une des revendications 1 à 5, **caractérisé en ce que** l'appareil d'entrée et de sortie de données (12, 12') comporte un dispositif pour une transmission de données sans fil ou par ligne, des touches pour la mise en service, la commutation de la voie d'écoulement entre une arrivée de baignoire et une douchette et pour le réglage du débit, des touches pour la saisie de valeurs sélectionnées pour la température de l'eau et/ou la quantité de remplissage et/ou l'heure de remplissage de la baignoire, des touches de mémoire pour mémoriser des valeurs sélectionnées et un écran pour l'affichage des valeurs réglées.

7. Dispositif selon l'une des revendications 1 à 6, **caractérisé en ce que** l'appareil d'entrée et de sortie de données (12, 12') comporte un clavier en feuille étanche à l'eau et est réalisé sous la forme d'une télécommande portable ou est encastré dans le bord de la baignoire sanitaire ou est placé sur le mur dans un boîtier à encastrer.

8. Dispositif selon l'une des revendications 1 à 7, **caractérisé en ce qu'**un thermomètre de baignoire (13) et/ou un dispositif (14) pour détecter le niveau de remplissage et/ou un haut-parleur (33) pour délivrer un signal acoustique sont raccordés à la commande électronique (11).

9. Dispositif selon l'une des revendications 1 à 6, **caractérisé en ce que** des dispositifs supplémentaires, par exemple des projecteurs de baignoire (32) ou des pompes de circulation d'un système à remous (35) peuvent être actionnés au moyen de la commande électronique (11).

10. Dispositif selon l'une des revendications 1 à 9, **caractérisé en ce que** la commande électronique (11) comporte une interface pour un système BUS (34).

11. Dispositif selon l'une des revendications 1 à 10, **caractérisé en ce qu'**il est prévu en outre un dispositif de réglage (8) qui peut être commandé par la commande électronique (11) pour actionner une vanne d'écoulement (9) dans l'écoulement de la baignoire, qui comporte un boîtier de tiroir (28) avec un tiroir (29) ainsi qu'un servomoteur (30) fixé au boîtier de tiroir (28) et raccordé à la commande (11) pour actionner le tiroir (29), et **en ce que** le tiroir (29) est relié, avec action à distance, à la vanne d'écoulement (9), par un élément d'actionnement à traction/pression (31).

12. Dispositif selon la revendication 11, **caractérisé en ce que** le servomoteur (30) comporte un pignon mené qui engrène avec un profil denté du tiroir (29).
